# NEUE EUROPÄISCHE PATENTSCHRIFT

(11) **EP 0 995 582 B2**
(45) Veröffentlichungstag und Bekanntmachung des Hinweises auf die Entscheidung über den Einspruch: **02.10.2013**
(45) Hinweis auf die Patenterteilung: 14.07.2004
(21) Anmeldenummer: 99117322.0
(22) Anmeldetag: 03.09.1999
(51) Int. Cl.: B29C 51/44, B29C 51/26, B65G 57/16

(54) **Thermoformmaschine**
Thermo-forming machine
Machine de thermoformage

(30) Priorität: 22.10.1998 DE 19848627
(43) Veröffentlichungstag der Anmeldung: 26.04.2000
(73) Patentinhaber: Gabler Maschinenbau GmbH, 23568 Lübeck (DE)
(72) Erfinder: Rowedder, Axel, 23623 Ahrensbök (DE)
(74) Vertreter: Grosse, Wolf-Dietrich Rüdiger

(56) Entgegenhaltungen:
- WO-A-94/15863
- DE-A- 3 346 628
- DE-A1- 3 624 683
- DE-U1- 29 514 719
- DE-U1- 29 802 318

## Beschreibung

Die Erfindung betrifft eine Thermoformmaschine mit einer speicherprogrammierbaren Steuerung zum Formen und Stanzen von tiefgezogenen, beliebigen becher- oder deckelartigen Artikeln aus thermoplastischem, über einen intermittierenden Folientransport zugeführtem Kunststoff oder dergleichen, umfassend ein mit mehreren über- bzw. nebeneinanderliegenden Artikelreihen ausgebildetes Mehrfach-Form- und Stanzwerkzeug, bestehend aus einem Oberwerkzeug und einem zum Abstapeln der Fertigartikel ausschwenkbaren Unterwerkzeug, dem in einer nachgeschalteten automatischen Stapel- und Zählvorrichtung eine die nach dem Schwenken des Maschinentisches bzw. des Unterwerkzeuges aus der Maschine ausgestoßenen Artikel in komplementären Ausformungen zu Artikelstangen zusammenführende, verfahrbare Fangplatte zugeordnet ist, aus der beim Erreichen der vorgewählten Stückzahl die Artikelstangen in einer maschinenentfernten Übergabeposition auf eine Artikelstangen-Aufnahmeplatte bzw. einen Stapelkorb übergeleitet und von dort entnommen werden.

Bei einer aus der DE 33 46 628 C2 bekannten Thermoformmaschine dieser Art werden zwischen den relativ aufeinanderzu- bzw. voneinanderwegbewegten Werkzeugen Kunststoffartikel wie Margarineschalen, Trinkbecher, Behälterdeckel, Trays usw. aus thermoplastischen Kunststoff-Folien und Verbundfolien hergestellt. Hierbei werden in der geschlossenen Stellung von Ober- und Unterwerkzeug die Artikel geformt, dann gestanzt und bei geöffneter Stellung aus dem Werkzeug heraus in eine nachgeschaltete Stapel- und Zähleinrichtung transportiert. Das Oberteil bzw. -werkzeug der Thermoformmaschine ist an einer starren Querbrücke montiert, während das Unterteil bzw. -werkzeug auf einem höhenbeweglichen und schwenkbaren Formtisch befestigt ist. Zur Schwenkbarkeit des Formtisches besitzt dieser Lagerzapfen, deren Lager in je einen vertikal geführten Führungsstück angeordnet sind. Zum Antrieb dienen Kniehebel, die mit Kurvenrollen den auf einer Hauptwelle befestigten Kurvenscheiben anliegen.

Damit die Artikel beim Abstapeln nicht gegen Störkanten geraten, wie beispielsweise im Bereich des Folientransportes, ist für das ausschwenkbare Unterwerkzeug ein großer Schwenkwinkel von etwa 45 bis 90°,typischerweise von 80°, erforderlich. Die in der ausgeschwenkten Werkzeug-Endlage aus der Maschine ausgestoßenen Fertigartikel werden von einer dem gekippten Werkzeug entgegenfahrenden bzw. dem Werkzeug zugestellten Fangplatte aufgenommen, um ein reproduzierbares Einstapeln zu ermöglichen. Das Verfahren der Fangplatte abwechselnd auf die Maschine zu und von dieser weg ist erforderlich, um aus den Störradius bzw. -bereich im Schwenkweg des kippenden Werkzeuges zu gelangen. Dieser Zustell- bzw. Verfahrweg beträgt bei den bekannten Thermoformmaschinen ca. 80 bis150 mm. Wenn dieses Verfahren als Folgesteuerung von Maschinen-Kipptisch und Fangplatte ausgelegt ist, ergeben sich erhöhte Totzeiten für den Maschinenzyklus. Ein zur Verringerung der Totzeiten alternatives schnelles Zurückfahren mit hoher Beschleunigung und Verzögerung und damit entsprechend hoher Verfahrdynamik setzt aufwendige Haltekonstruktion für die in der beschleunigten bzw. verzögerten Fangplatte den Massenkräften ausgesetzten Artikel voraus. Dabei trifft allerdings durch die Haltekonstruktionen, wie im Bereich der Artikelstangen der Fangplatte angeordnete lange Haltebürsten, ein nachteiliger Verformungseinfluß auf die Fertigartikel beim Einstapeln, Auskämmen und Abschieben der Fertigartikel auf. Um die Massenkräfte möglichst gering zu halten, wird der Verfahrweg bei den bekannten Thermoformmaschinen daher so klein wie möglich gehalten, was aber eine jeweils produktspezifische Einstellung der Betriebsweise der Maschine erfordert.

Eine aus der DE-Zeitschrift "Kunststoffe 88, (1998) 2, Seiten 158 bis 161 bekannte Thermoformmaschine der eingangs genannten Art sieht vor, dass die dort geformten Becher von einer Saugerplatte übernommen und in Zentrierpaletten gestapelt werden. Zuvor ist das Unterwerkzeug nach dem Formvorgang um 80° zur Foliendurchlaufrichtung, d. h. in die ideale Übergabeposition der Becher in die Stapeleinrichtung gekippt worden. Das Ansaugen der Artikel macht allerdings den Auswerfer komplizierter und die Einheit bedingt durch die benötigte Vakuumanlage aufwendiger.

Aus der DE 298 02 318 U1 ist eine Thermoformmaschine der eingangs erwähnten Art mit parallel zueinander beabstandeten Stapelstäben bekannt, die eine Artikelstange mit Bechern aufnehmen. Im Bereich des Kopfendes eines aus der Thermoformmaschine ausgestoßenen Fertigartikels sind Rückhalteelemente in Form von Aushebem angeordnet. Die Ausheber üben die Artikelrückhaltefunktion mit sich in Stapelrichtung trichterartig erweiternden federnden Ausheberlamellen aus. Sobald ein Becher die Länge der Ausheber überwunden hat, stellen sich die Ausheberlamellen in ihre Ausgangslage zurück, in der sie den Kragen des Bechers halten. Die Ausheber üben, während der Becher längs der Ausheber bewegt wird, permanent auf dessen Kopfende eine der Federkraft der Lamellen entsprechende Kraft in radialer Richtung aus, die zu Artikelranddeformationen führen kann.

Die DE 295 14 719 U1 offenbart eine Thermoformmaschine, die unter anderem eine Entnahmevorrichtung umfasst, die so ausgelegt ist, dass sie einen Fertigartikel aus einer Matrize entnehmen und diesen an eine Aufnahmeschablone übergeben kann. Die Schablonen liefern die Fertigartikel an eine Handhabungs- oder Behandlungsstation, wie beispielsweise eine Sterilisier- und Stapelstation für die Fertigartikel. Die Schablone ist so ausgestaltet, dass die Becher lediglich von oben durch die entsprechenden Löcher in die Schablone eingesetzt werden können. In einem Bund der Schablone vorgesehene, federbelastete Klinken lassen sich radial bezogen auf die Achse des Fertigartikels bewegen. In Folge dessen fixieren die Klinken durch einen Druck auf die Außenfläche des Artikels diesen in dem Bund.

Der Erfindung liegt die Aufgabe zugrunde, eine gattungsgemäße Thermoformmaschine so zu gestalten, dass ohne erhöhte Totzeiten im Maschinenzyklus auf einfache Weise eine prozeßsichere, artikelschonende Handhabung der Fertigartikel beim Ausstoßen in die Fangplatte möglich ist und zugleich auf einfache Weise ein Abkippen des Artikelbodens bzw. des nacheilenden Artikelkorpus verhindert wird.

Diese Aufgabe wird erfindungsgemäß dadurch gelöst, dass sich der Formplatte hinter ihren die Fertigartikel aufnehmenden Ausformungen für jede Artikelstange zwei voneinander beabstandete parallele Stapelstäbe anschließen, die im Bereich des Kopfendes eines aus dem Unterwerkzeug in die Fangplatte ausgestoßenen Fertigartikels mit federbelasteten Stapelscharnieren versehen sind, und wobei auf den Stapelstäben zwischen dem Kopf- und Bodenende eines aus der Maschine in die Fangplatte ausgestoßenen Fertigartikels federbelastete Stützscharniere angeordnet sind.

Das Stapelstabpaar aus vorzugsweise Rundstäben stützt den Artikel bzw. die Artikelstange entlang der beiden Anlageflächen im wesentlichen linienförmig ab. Sobald ein Fertigartikel zur Abstapelung durch den Werkzeug-Auswerfer und die der Artikelreihe zugehörige Ausformung bzw.- -nehmung der Fangplatte geschoben wird und auf die Stapelscharniere auftrifft, klappen die federbelasteten, leichtgängigen Stapelscharniere um, so dass der Fertigartikel ungehindert auf die sich anschließenden Stapelstäbe gelangt. Wenn der größte Durchmesser des Fertigartikels die gegenüberliegend angeordneten Stapelscharniere passiert hat, stellen sich diese unter der Federkraft selbsttätig soweit wie möglich - bis letztendlich gegebenenfalls in ihre Ausgangslage - zurück. Der Fertigartikel wird durch die Stapelscharniere formschlüssig und somit reproduzierbar zur späteren Übergabe an den Stapelkorb fixiert. Die über die Scharniere auf den Artikel ausgeübten Reibkräfte tragen ohne einen nachteiligen Einfluß auf die Artikel zur Verhinderung des Auseinanderziehens einer Artikelstange bei.

Auf den Stapelstäben sind zwischen dem Kopf- und Bodenende eines aus der Maschine in die Fangplatte ausgestoßenen Fertigartikels federbelastete Stützscharniere angeordnet. Diese beim Ausstoßen eines Fertigartikels ebenfalls leichtgängig ausweichenden und sich dann selbsttätig in ihre Ausgangslage zurückstellenden Stützscharniere verhindern auf einfache Weise ein Abkippen des Artikelbodens bzw. des nacheilenden Artikelkorpus, indem sie sich an den Außenmantel beispielsweise des Korpus eines Bechers anlegen und diesen stützen. Bei den bekannten Ausführungen sind zu diesem Zweck stramm an- bzw. zugestellten Bürsten vorgesehen, die allerdings zu Beschädigungen des Fertigartikels führen können.

Ein weiterer Vorschlag der Erfindung sieht an den Stapelstäben im fangplattenseitigen Nahbereich vorgesehene Bremsbürsten vor. Die die Stapelscharniere gegebenenfalls ergänzenden und diesen dann unmittelbar nachgeschalteten, kürzer als ein Fertigartikel ausgebildeten Bremsbürsten verzögern die Artikeldynamik kraftschlüssig und tragen dazu bei, einem Auseinanderziehen der Artikelstange entgegenzuwirken. Die Zustellung und somit die auf den Artikel wirkende Bürstenkraft braucht dabei nur gering zu sein und ist jedenfalls nicht so groß, daß Beschädigungen am Fertigartikel auftreten. Außerdem sind die Bürsten so klein, dass nur der aktuell eingestapelte Fertigartikel verzögert wird.

Weitere Merkmale und Vorteile der Erfindung ergeben sich aus den Ansprüchen und der nachfolgenden Beschreibung, in der ein Ausführungsbeispiel des Gegenstandes der Erfindung näher erläutert ist. Es zeigen:
- Fig. 1: in der Seitenansicht eine Thermoformmaschine mit nachgeschalteter Stapel- und Zählvorrichtung für in diesem Ausführungsbeispiel abzustapelnde Becher, schematisch dargestellt; und
- Fig. 2: als Einzelheit in der Draufsicht einen Teil-Querschnitt durch eine Fangplatte im Bereich einer Ausformung mit sich dieser nach hinten hin anschließenden Stapelstäben.

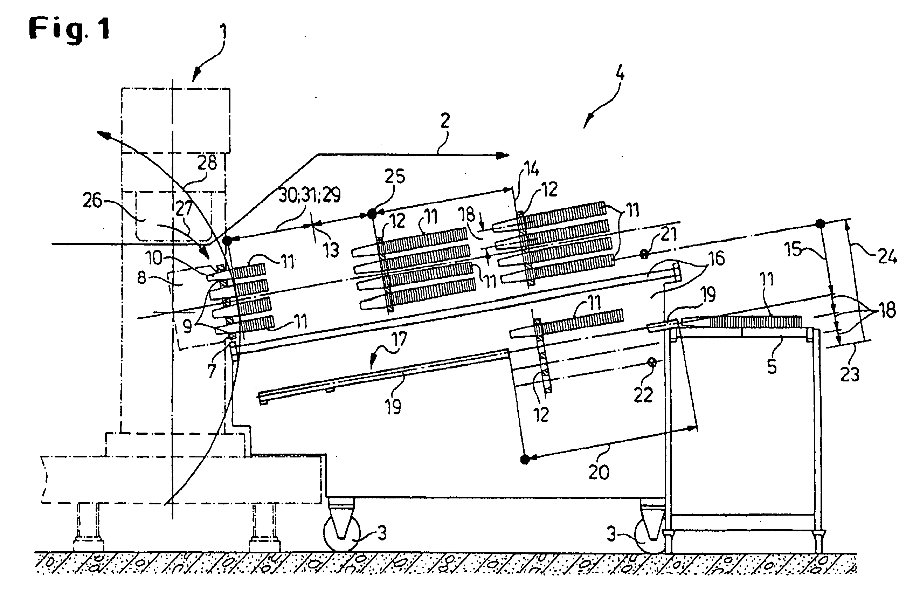

Einer Thermoformmaschine 1 wird gemäß Fig. 1 von einer Seite her ein Kunststoff Folienband 2 einlaufseitig zugeführt und auslaufseitig gemäß Pfeil auf einer nicht dargestellten Wickelrolle wieder aufgewickelt. Der Thermoformmaschine 1 ist eine auf Rädern 3 verfahrbare, automatische Stapel- und Zählvorrichtung 4 sowie dieser ein Transportband 5 nachgeschaltet. Die Stapel- und Zählvorrichtung 4 umfaßt eine verfahrbare Fangplatte 7, die entsprechend der Anzahl der in dem Unterwerkzeug 8 der Thermoformmaschine 1 in über- und nebeneinanderliegenden Reihen vorgesehenen Formnester eine entsprechende Zahl von Ausformungen bzw. -nehmungen 9 aufweist, in die die Fertigartikel 10 von - nicht dargestellten - Ausstoßern der Thermoformmaschine 1 eingebracht und dort zu Artikelstangen 11 mit einer durch die speicherprogrammierbare Steuerung (nicht gezeigt) der Thermoformmaschine 1 vorgegebenen Anzahl von Fertigartikeln 10 ineinandergestapelt werden. Die Stapel- und Zählvorrichtung 4 weist weiterhin einen Stapelkorb 12 auf, der die Artikelstangen 11 auf das Transportband 5 abgegeben werden, beispielsweise um einem weiteren Bearbeitungsvorgang wie einer Bedruckmaschine oder einem Bördelaggregat zugeführt weden.

Der Stapelkorb 12 ist zur Abnahme der Artikelstangen 11 in Richtung auf die Fangplatte 7 bis zu einer Übergabeposition 13 verfahrbar und nach der Abnahme der Artikelstangen 11 in eine von der Fangplatte 7 entfernte Entladestation 14 verfahrbar. Der Stapelkorb 12 kann aus dieser Position heraus taktweise abgesenkt werden, und zwar zunächst mit einem großen Senkhub 15 so weit, bis die untere Reihe der Artikelstangen 11 in Flucht mit einer in dem Traggestell 16 der Stapel- und Zählvorrichtung 4 angeordneten Abschiebereinheit 17 liegt, und danach jeweils mit einem dem Höhenmaß 18 der übereinanderliegenden Reihen von Artikelstangen 11 entsprechenden Hub. Die Abschiebereinheit 17, die für jede Artikelstange 11 einen Abschieberstab 19 besitzt und in Richtung des Doppelpfeiles 20 hin und her bewegbar ist, schiebt die in Teilhüben sukzessive abgesenkten Artikelstangen auf das Transportband 5 über. Nach jedem Abschiebevorgang wird das Transportband so weit verfahren, dass die Artikelstangen der nächstfolgenden Artikelreihe des Stapelkorbes 12 abgeschoben werden können. Das Absenken des Stapelkorbes 12 wird von zwei Endlagenschaltern 21 bzw. 22 überwacht. Sobald der letzte Abschiebevorgang beendet ist, wird der entleerte Stapelkorb 12 aus seiner untersten Endstellung 23 gemäß Pfeil 24 in die obere Endlage angehoben und anschließend in die Ausgangsposition 25 verfahren, aus der heraus er dann zur Abnahme von während der Zeit des Abschiebens der Artikelstangen in die Fangplatte 7 eingestapelten neuen Fertigartikel 10 in die Übergabeposition 13 verstellt wird.

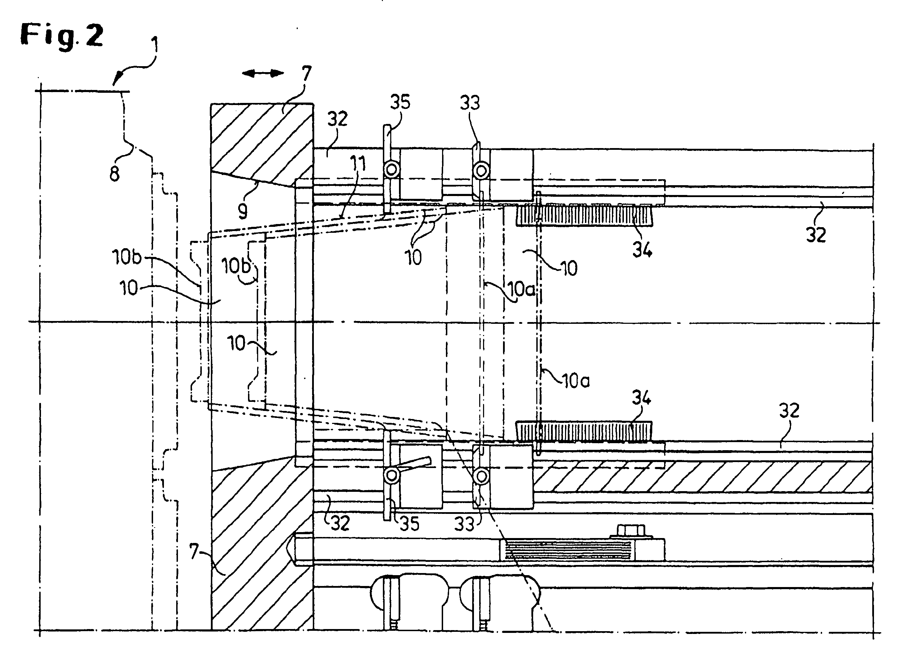

Die Fangplatte 7 nimmt nämlich ununterbrochen neue Fertigartikel (Becher) 10 auf, die aus dem auf seinem Weg zu der neben dem Unterwerkzeug 8 auch ein Oberwerkzeug 26 sowie eine nicht gezeigte Heizstation der Thermoformmaschine 1 durchlaufenden Folienband 2 hergestellt werden. Denn sobald ein der Anzahl der in dem Unterwerkzeug 4 vorgesehenen Formnester entsprechender Abschnitt des Folienbandes zwischen Ober- und Unterwerkzeug 26 bzw. 8 eingelaufen ist, werden bei geschlossenen Werkzeugen die Artikel ausgeformt und -gestanzt. Sobald die Artikel 10 fertiggestellt sind, wird das Unterwerkzeug 8 in Pfeilrichtung 27 in die in Fig. 1 unten gezeigte Auswurfstellung verschwenkt. Das Unterwerkzeug 8 bestreicht beim Kippen bzw. Ausschwenken einen schematisch als Störradius 28 in Fig. 1 eingezeichneten Bereich, der nämlich während der Schwenkbewegung des Unterwerkzeuges 8 von der Fangplatte 7 nicht gestört werden darf, d. h. frei bleiben muß. Die Fangplatte 7 wird daher synchron mit dem Schwenken des Unterwerkzeuges 8 von diesem weggefahren bzw. dem gekippten Werkzeug zugestellt. Dies wird mit einer stets gleichen, einem Auseinanderziehen der in die Fangplatte schon ineinandergestapelten Fertigartikel 10 entgegenwirkenden Verfahrdynamik erreicht, indem der Verfahrweg 29 der Fangplatte 7 über den für den Störradius 28 des Schwenkweges des Unterwerkzeugs 8 eigentlich benötigten Verfahrweg 30 (vgl. die Fig. 2a und b) hinaus verlängert ist und noch durch eine zweite, zusätzliche, harmonisch, mit geringer Beschleunigung bzw. Verzögerung zu durchfahrende Wegstrecke 31 (vgl. Fig. 2b) ergänzt wird.

Wie näher der Fig. 2 zu entnehmen ist, die eine der entsprechend dem Mehrfach-Werkzeug zahlreichen Ausformungen 9 der Fangplatte 7 zeigt, schließen sich der Ausformung 9 in Einstapelrichtung der ausgestoßenen Fertigartikel 10 zwei im Abstand zueinander verlaufende, die Fertigartikel 10 bzw. die Artikelstange 11 tragende Stapelstäbe 32 an. Auf den Stapelstäben 32 sind im Bereich des Kopfrandes 10a des einzustapelnden, im Ausführungsbeispiel becherförmigen Fertigartikels 10 (z. B. auch ein Deckel oder eine Schale) federbelastete Stapelscharniere 33 angeordnet, die den eingeschobenen Fertigartikel 10 den Kopfrand 10a hintergreifend formschlüssig fixieren. Den Stapelscharnieren sind in Einstapelrichtung kurze, gering an den Fertigartikel 10 an- bzw. zugestellte Bremsbürsten 34 unmittelbar nachgeordnet, die auf die Artikeldynamik kraftschlüssig, verzögernd einwirken.

Vor allem beim Ausstoßen und Abstapeln langer Fertigartikel 10, wie den dargestellten Bechern, sind auf den Stapelstäben 32 weiterhin federbelastete Stützscharniere 35 vorgesehen, und zwar im Bereich zwischen dem Kopfende bzw. -rand 10a und dem Bodenende 10b des Fertigartikels 10. Diese klappen beim Einstoßen eines Fertigartikels 10 um (vgl. die Klapplage im unteren Teil der Fig. 2) und stellen sich anschließend unter der Federkraft selbsttätig zurück in ihre Ausgangslage, in der sie sich stützend an den Artikelkorpus anlegen und dessen Abkippen um seine Längsachse verhindern.

## Patentansprüche

1. Thermoformmaschine mit einer speicherprogrammierbaren Steuerung zum Formen und Stanzen von tiefgezogenen, beliebigen becher- oder deckelartigen Artikeln aus thermoplastischem, über einen intermittierenden Folientransport zugeführtem Kunststoff oder dergleichen, umfassend ein mit mehreren über- bzw. nebeneinanderliegenden Artikelreihen ausgebildetes Mehrfach-Form- und Stanzwerkzeug, bestehend aus einem Oberwerkzeug und einem zum Abstapeln der Fertigartikel ausschwenkbaren Unterwerkzeug, dem in einer nachgeschalteten automatischen Stapel- und Zählvorrichtung eine die nach dem Schwenken des Maschinentisches bzw. des Unterwerkzeugs aus der Maschine ausgestoßenen Artikel in komplementären Ausformungen zu Artikelstangen zusammenführende, verfahrbare Fangplatte zugeordnet ist, aus der beim Erreichen der vorgewählten Stückzahl die Artikelstangen in einer maschinenentfernten Übergabeposition auf eine Artikelstangen-Aufnahmeplatte bzw. einen Stapelkorb übergeleitet und von dort entnommen werden,
**dadurch gekennzeichnet,**
**daß** sich der Fangplatte (7) hinter ihren die Fertigartikel (10) aufnehmenden Ausformungen (9) für jede Artikelstange (11) zwei parallel voneinander beabstandete Stapelstäbe (32) anschließen, die im Bereich des Kopfendes (10a) eines aus der Maschine (1) ausgestoßenen Fertigartikels (10) mit federbelasteten Stapelscharnieren (33) versehen sind, und wobei auf den Stapelstäben (32) zwischen dem Kopf- und Bodenende (10a, 10b) eines aus der Maschine (1) in die Fangplatte (7) ausgestoßenen Fertigartikels federbelastete Stützscharniere (35) angeordnet sind.

2. Thermoformmaschine nach Anspruch 1,
**gekennzeichnet durch**,
an den Stapelstäben (32) im fangplattenseitigen Nahbereich vorgesehene Bremsbürsten (34).

## Claims

1. Thermoforming machine having a programmable logic controller for moulding and stamping deep-drawn cup and lid articles of any type from thermoplastic material or similar that is fed via an intermittent film transport means, comprising a multiple mould and stamping tool constructed with a plurality of article rows arranged one above the other or side by side and including an upper tool, also a lower tool that can be swung out for destacking the finished articles, to which lower tool a movable collecting plate in a downstream automatic stacking and counting device is assigned for collecting the ejected articles to form stacks of articles in complementary shaped elements after the machine table or lower tool has been swung out of the machine, from which collecting plate the article stacks are transferred to an article stack intermediate plate or stack basket in a transfer position removed from the machine when the preselected number of articles is reached, and are transported away from there, **characterized in that** two stacking rods (32) arranged at a distance and parallel to one another are arranged downstream of the collecting plate (7) and after the shaped elements (9) thereof accommodating the finished articles (10) for each article stack (11), which rods are equipped with spring-loaded stack hinges (33) in the region of the head end (10a) of a finished article (10) that is ejected from the machine (1), and wherein springloaded support hinges (35) are arranged on the stacking rods (32) between the head and bottom end (10a, 10b) of a finished article ejected into the collecting plate (7) from the machine (1).

2. Thermoforming machine according to claim 1, **characterized by** retarding brushes (34) provided on the stacking rods (32) in the close region on the collecting plate side.

## Revendications

1. Machine de thermoformage avec un automate programmable pour le moulage et l'estampage d'articles quelconques emboutis de type gobelets ou couvercles à partir de matière synthétique thermoplastique, alimentée par un système de transport à feuilles intermittent ou une matière analogue, comprenant un outil de moulage multiple et d'estampage constitué de plusieurs rangées d'articles superposées ou juxtaposés, composé d'un outil supérieur et d'un outil inférieur pivotable pour le dépilage des articles finis auquel est affectée une plaque de récupération mobile dans un dispositif d'empilage et de comptage automatique raccordé en aval réunissant après pivotement de la table de machine ou de l'outil inférieur, en paquets d'articles, les articles éjectés de la machine dans des éléments de démoulage complémentaires, à partir de laquelle les paquets d'articles dans une position de transfert éloignée de la machine sont transmises sur une plaque de réception de paquets d'articles ou une corbeille d'empilage et y sont prélevées **caractérisée en ce que** deux tiges d'empilage (32) parallèlement à distance l'une de l'autre se raccordent à la plaque de récupération (7) derrière ses éléments de démoulage (9) recevant les articles finis (10) pour chaque paquet d'articles (11), qui sont munies dans la zone de l'extrémité de tête (10a) d'un article fini (10) éjecté de la machine (1) de charnières d'empilage (33) à ressort et pour laquelle des charnières de soutien (35) à ressort sont disposées sur les tiges d'empilage (32) entre les extrémités de tête et de fond (10a, 10b) d'un article fini éjecté de la machine (1) dans la plaque de récupération (7).

2. Machine de thermoformage selon la revendication 1 **caractérisée par** des balais de freinage (34) prévus sur les tiges d'empilage (32) dans une zone proche du côté de la plaque de récupération.
